# EUROPEAN PATENT SPECIFICATION

(11) **EP 1 629 999 B1**
(45) Date of publication and mention of the grant of the patent: **20.10.2010**
(21) Application number: 05013705.8
(22) Date of filing: 24.06.2005
(51) Int. Cl.: B60B 33/02

(54) **Castor**
Lenkrolle
Roulette

(30) Priority: 27.08.2004 GB 0419121
(43) Date of publication of application: 01.03.2006
(73) Proprietor: Colson Castors Limited, Hill Top, West Bromwich, West Midlands B70 0UA (GB)
(72) Inventor: Spencer, Richard John Golds Green Works, West Midlands, B70 0UA (GB); Hinchliffe, Phillip Alexander Golds Green Works, West Midlands, B70 0UA (GB)
(74) Representative: Wardley, Diana Mary

(56) References cited:
- EP-A1- 0 803 382
- DE-A1- 3 522 989
- DE-A1- 19 516 586
- DE-U1- 9 300 119
- DE-U1- 9 417 054

## Description

This invention relates to a castor. Castors in accordance with the present invention are intended particularly, but not exclusively, for use on trolleys.

It is conventional practice for a trolley (or "dolly" as it is known in the art) to be provided with four castors, one at each corner of the dolly. Such castors each have at least one ground-engaging castor wheel rotatable about an axis which in use is generally horizontal. The wheel is carried by a support structure which is swivelable relative to its connection to the dolly, about a swivel axis which, in use, is generally vertical, and which is off-set from the horizontal axis about which the wheel can rotate.

A castor for a dolly or the like is required to be able to have its wheel braked to at least resist, or preferably completely prevent, rotation. It is also a requirement that it should be able to be prevented from swivelling about its swivel axis, and such braking of its wheel and prevention of swivelling may be required to be effected together, a condition usually, and herein, called "total lock". For example, for a dolly having four castors (one connected near each corner of the dolly) it is conventionally required that at least one of the castors is able to have its wheel braked and also be prevented from swivelling.

EP 0803382A discloses a castor whose wheel is able to be braked and wherein swivelling of the castor about its swivel axis is able to be prevented by locking means. However, the control means for braking and locking is carried by a part of the castor which supports the wheel and swivels therewith, so that in certain swivelling positions the control means for the braking and locking might be inaccessible. This is inconvenient.

DE 9417054U discloses a castor with a head plate which connects the castor to a body supported by the castor, the head plate having an operating pedal able to move a generally conical brake shoe by way of a tappet extending down the swivel axis of the castor. The brake shoe is able to engage the castor fork to prevent the castor from swivelling, as well as engaging the wheel to prevent the latter from rotating.

According to the invention there is provided a castor, including at least one castor wheel mounted on a support member for rotation about a wheel axis; a connection member for connection of the castor to a body, the support member being connected to the connection member for swivelling movement about a swivel axis which is substantially perpendicular to the wheel axis and off-set therefrom; braking means for inhibiting rotation of the wheel relative to the support member; holding means for holding the support member against its swivelling movement relative to the connection member; and actuating means moveable to cause the braking means and the holding means to be brought into operation, the actuating means including an actuating lever pivotally supported by the connection member, and an actuating member extending coaxially along the swivel axis of the castor and moveable by the actuating lever in a direction substantially parallel to the swivel axis of the castor, characterised by a braking member having a part connected to the actuating member and a portion remote from the part engageable with a part of the wheel for braking same being pivotally supported by the support member between the and portion and having at least one holding formation engageable with a holding member for holding the support member against swivelling movement; the holding member being fixed to the connection member , and a portion thereof extending to the support member to be engageable by the holding formation(s) of the braking member.

Providing the actuating means on a part of the connection member means that when the connection member is connected to a body, such as a dolly or the like, a user has at all times access to the actuating means to cause the braking means to be brought into operation. As the actuating means is not directly connected to the support member, it cannot swivel underneath the body, which would mean that the user would not have access to it.

Thus, when a user pivots the actuating lever about its pivotal connection to the connection member, the actuating lever causes the actuating member to move, which in turn causes the braking member to engage the wheel.

When the actuating member has been moved by the actuating lever to cause operation of the braking member, it may be necessary to swivel the support member relative to the connection member slightly so as the align the holding member with the holding formation.

These and other features of the invention will now be described by way of example only with reference to the accompanying drawings, of which:
Figure 1 is a perspective, part cross-sectional view, of a castor in accordance with the present invention with a braking member thereof in an inoperative condition;
Figure 2 is perspective view from one side and below of the castor of figure 1; and
Figure 3 is a perspective view of the castor of figure 1 with a braking member thereof in an operative condition.

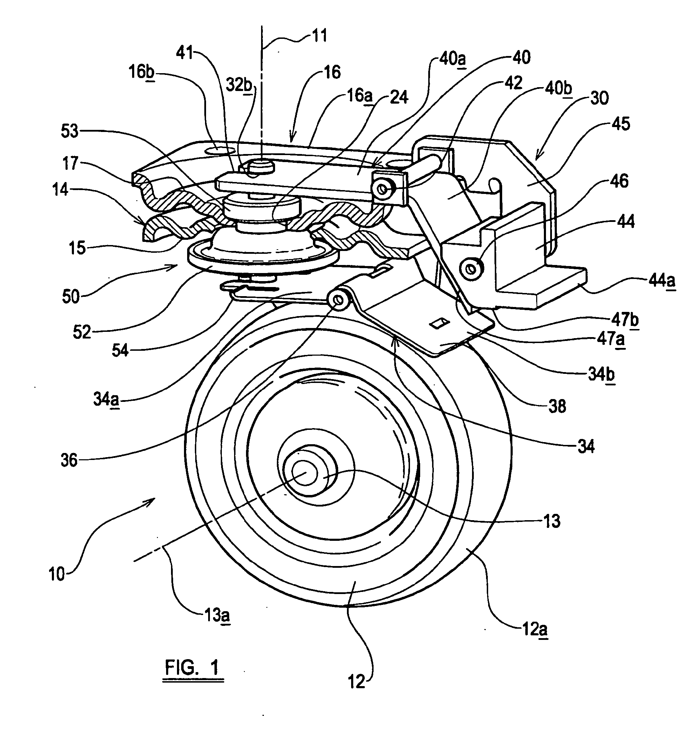

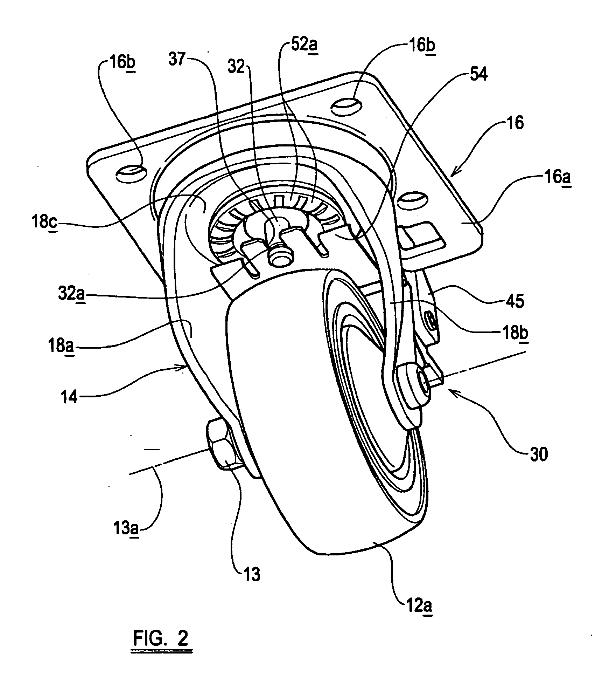

Referring to figures 1 and 2 a castor in accordance with the present invention is shown generally at 10. The castor 10 has a castor wheel 12 with a wheel surface 12a. The wheel 12 is connected to a support member 14, with suitable bearings, by a wheel axle 13 and is free to rotate about a wheel axis 13a, which in use is substantially horizontal. The castor 10 also includes a connection member 16 which is connected to and supports the support member 14 so that the support member 14 can swivel relative to the connection member 16 about a swivel axis 11, which is in use substantially vertical. The connection member 16 facilitates connection of the castor 10 to a body (not shown), such as, for example, a dolly or the like.

The axes 11 and 13a are substantially perpendicular to each other and are off-set from each other such that at no point do they intersect.

The support member 14 includes a pair of walls 18a, 18b, which are connected at corresponding ends thereof near the connection member 16, by a connecting wall or yoke 18c. Free ends of the connecting walls 18a, 18b, are each provided with an aperture through which the axle 13 is passed to fix the wheel 12 relative thereto and to allow for rotation of the wheel 12 about the wheel axis 13a.

The connection member 16 includes a substantially rectangular part 16a and a pair of substantially parallel walls 45 which extend away from an edge of the rectangular part 16a, substantially perpendicularly to a plane of the rectangular part 16a. The rectangular part 16a includes a plurality of apertures 16b to facilitate connection of the connection member 16 to a body. The castor 10 also includes a braking member 34 which is pivotally connected to the support member 14 between the side walls 18a, 18b by a pin 36 (which defines a pivoting axis substantially parallel to the wheel axis 13a). The braking member 34 has a first part 34a, which extends away from the pin 36 towards the swivel axis 11. When the wheel 12 is not being braked the first part 34a lies substantially parallel to the plane of the rectangular part 16a of the connection member 16. An end of the first part 34a of the braking member 34 which lies near the swivel axis 11 is provided with a slot 37, the purpose of which will be discussed later.

The braking member 34 has a second part 34b, which is connected to the first part 34a and extends away from the pin 36 and the swivel axis 11 downwardly towards the wheel 12. An end 38 of the second part 34b of the braking member 34 lies near the surface 12a of the wheel 12. It is this end 38 which, in use, engages the surface 12a of the wheel 12 to brake the wheel 12.

A surface of the yoke 18c which faces away from the connecting walls 18a, 18b includes a formation 15 which, together with a formation 17 on the rectangular part 16a of the connection member 16, provides a substantially annular cavity for reception of suitable ball bearings (not shown) which allow the support member 14 to swivel smoothly relative to the connection member 16 about the swivel axis 11.

The castor 10 includes an actuating lever 40, which is pivotally supported between the walls 45 of the connection member 16 by a pin 42 (which defines a pivoting axis substantially parallel to the wheel axis 13a). The actuating lever 40 has a first part 40a, which extends from the pin 42 towards the swivel axis 11 and over the rectangular part 16a of the connection member 16. When the wheel 12 is not being braked the part 40a lies substantially parallel to the plane of the rectangular part 16a of the connection member 16. An end of the first part 40a of the actuating lever 40 which lies near the swivel axis 11 is provided with a slot 41, the purpose of which will be discussed later.

The actuating lever 40 has a second part 40b, which is connected to the first part 40a and extends away from the pin 42 and the swivel axis 11 downwardly towards the wheel 12. An end of the second part 40b of the actuating lever 40 remote from the pin 42 is engaged by a cam member 44. The cam member 44 is supported for rotational movement between the walls 45 by a pin 46 (which defines a rotational axis substantially parallel to the wheel axis 13a). It is this cam member 44 which is actuated by a user to effect movement of the actuating lever 40.

The cam member 44 has two adjacent cam surfaces 47a, 47b, and a lip 44a. The cam surface 47a lies closer to the pin 46 and the cam surface 47b lies farther away from the pin 46. The lip 44a projects away from the pin 46 and the swivel axis 11. It is this lip 44a which a user engages with their foot or hand to rotate the cam member 44 about the pin 46.

When the wheel 12 is not being braked, the cam member 44 is positioned such that the cam surface 47a is engaged with the end of the second part 40b. Rotation of the cam member 44 about the pin 46 by a downward force applied by a user to the lip 44a (i.e. clockwise as viewed from figure 1), so that the cam surface 47b now engages the end of the second part 40a, causes the actuating lever 40 to pivot about the pin 42, so that the end of the first part 40b of the actuating lever 40 remote from the pin 42 moves away from the rectangular part 16a of the connection member 16.

The rectangular part 16a of the connection member 16 and the yoke 18c of the support member 14 are each provided with an aperture, substantially coaxial with their respective formation 15, 17, which face each other and defines a passage 24 extending therethrough towards the wheel 12. The passage 24 is shaped to receive an actuating member 32, which is substantially cylindrical and which is moveable through the passage 24 along the swivel axis 11.

A lower end of the actuating member 32 is provided with a circumferential groove 32a which is received in the slot 37 in the first part 34a of the braking member 34. An upper end of the actuating member 32 is provided with a circumferential groove 32b which is received in the slot 41 in the first part 40a actuating lever 40. Thus, the first part 40a of the actuating lever 40 and the first part 34a of the braking member 34 are connected to each other by the actuating member 32. This ensures that movement of the actuating lever 40, effected by the cam member 44, effects movement of the braking member 34.

The circumferential grooves 32a, 32b also ensure that the actuating member 32 effectively "floats" in the passage 24 and is free to rotate about the swivel axis 11.

The castor 10 also includes holding means 50 for holding the support member 14 relative to the connection member 16 so as to inhibit swivelling therebetween. The holding means 50 includes a disc-shaped holding member 52 which is slidably received on the actuating member 32 and is provided with a plurality of circumferentially spaced teeth 52a on an underside thereof which faces the wheel 12. The holding member 52 lies beneath the yoke 18c of the support member 14 and is connected to a part 53 which is also slidably received on the actuating member 32. The part 53 includes a disc-shaped flange which lies above and is connected to the rectangular part 16a of the connection member 16 and a portion which extends through the passage 24. It is this portion of the part 53 which is connected to the holding member 52. Thus the holding member 52 is fixed relative to the connection member 16, with the support member 14 free to swivel about the swivel axis 11 around the holding member 52.

The end of the first part 34a of the braking member 34 which has the slot 37 is also provided with a pair of holding formations 54 spaced from each other at opposite sides of the slot 37. The holding formations 54 are a pair of upwardly turned lips which, when the wheel 12 is being braked, each engage between respective adjacent teeth 52a of the holding member 52 on opposite circumferential sides thereof to hold the braking member 34, and thus the support member 14, relative to the connection member 16.

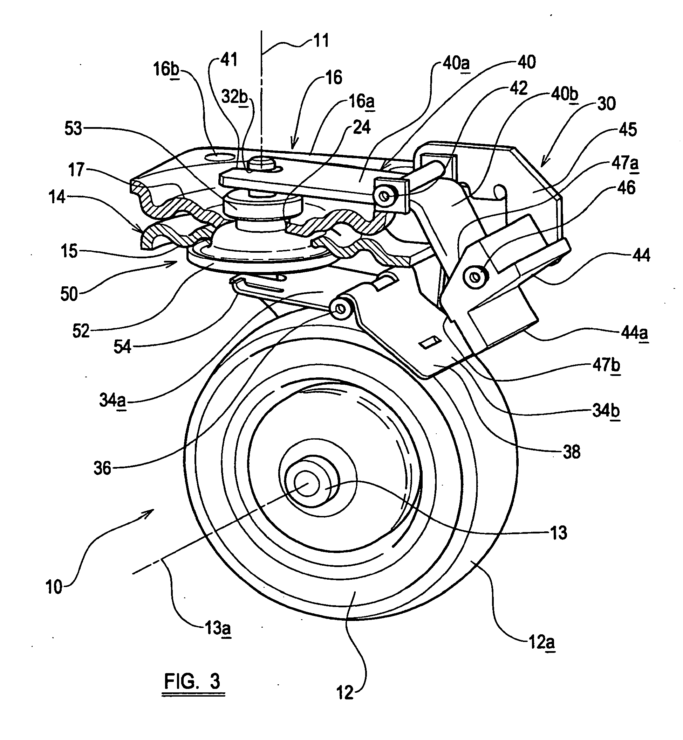

Referring now to figure 3, if it is desired to brake the wheel 12 of the castor 10, a user must firstly effect rotation of the cam member 44 by applying a downward pressure to the lip 44a with either a part of a foot or hand. As the cam member 44 rotates, the cam surface 47b is engaged with the end of the second part 40b of the actuating lever 40 remote from the pin 42, which pivots the actuating lever 40 about the pin 42.

This pivoting of the actuating lever 40 moves the end of the first part 40a of the actuating lever 40 remote from the pin 42 upwards away from the rectangular part 16a of the connection member 16. As the slot 41 in the end of the first part 40a of the actuating lever 40 is engaged with the groove 32b of the actuating member 32, the actuating member 32 is moved upwards away from the wheel 12 through the passage 24.

As the groove 32a in the lower end of the actuating member 32 is engaged with the slot 37 in the end of the first part 34a of the braking member 34 remote from the pin 36, movement of the actuating member 32 away from the wheel 12 also causes the braking member 34 to pivot about the pin 36. This pivotal movement of the braking member 34 causes the end 38 of the second part 34b of the braking member 34 to move downwards and to engage the surface 12a of the wheel 12 and thus brake the wheel 12.

During braking, as the actuating member 32 moves upwardly, away from the wheel 12, the formations 54 on the first part 34b of the braking member 34 engage between adjacent teeth 52a of the holding member 52 to hold the support member 14 relative to the connection member 16 and thus prevent swivelling therebetween. However, if the holding formations 54 are not aligned with troughs between the teeth 52a, it may be necessary to swivel the support member 14 relative to the connection member 16 slightly so as to align them.

In the above description, although the means for pivoting the actuating lever 40 about the pin 42 is provided by a cam member 44, it must be appreciated that other means may be used to effect pivoting of the actuating lever. One such means may be provided by a button or the like which engages the end of the second part 40a of the actuating lever 40 remote from the pin 42. When it is desired to brake the wheel 12, a user pushes the button to an operative position which applies a force to the second part 40b to pivot the actuating lever 40 about the pin 42, thus moving the actuating member 32 and braking member 34 to brake the wheel 12. Another such means could be provided by, as it is known in the art, a lever actuating a rotary cam.

When used in this specification and claims, the terms "comprises" and "comprising" and variations thereof mean that the specified features, steps or integers are included. The terms are not to be interpreted to exclude the presence of other features, steps or components.

## Claims

1. A castor, including:
at least one castor wheel (12) mounted on a support member (14) for rotation about a wheel axis (13a);
a connection member (16) for connection of the castor to a body, the support member being connected to the connection member for swivelling movement about a swivel axis (11) which is substantially perpendicular to the wheel axis (13a) and off-set therefrom;
braking means (34) for inhibiting rotation of the wheel (12) relative to the support member;
holding means (50) for holding the support member against its swivelling movement relative to the connection member; and
actuating means (40, 44, 32) moveable to cause the braking means (34) and
the holding means (50) to be brought into operation, the actuating means including an actuating lever (40) pivotally supported by the connection member (16), and an actuating member (32) extending coaxially along the swivel axis (11) of the castor and moveable by the actuating lever (40) in a direction substantially parallel to the swivel axis (11) of the castor;
**characterised by** a braking member (34) having a part (34a) connected to the actuating member (32) and a portion (34b) remote from the part (34a) engageable with a part of the wheel for braking same,
the braking member (34) being pivotally supported by the support member (14) between the part (34a) and portion (34b) and having at least one holding formation (54) engageable with a holding member (52, 53) for holding the support member against swivelling movement;
the holding member (52, 53) being fixed to the connection member (16), and
a portion (52) thereof extending to the support member (14) to be engageable by the holding formation(s) (54) of the braking member (34).

2. A castor according to claim 1 further **characterised in that** the actuating member extends through facing apertures provided in the connection member and the support member.

3. A castor according to claim 1 or claim 2 further **characterised in that** the actuating member (32) extends through the holding member (52, 53).

4. A castor according to any one of the preceding claims further **characterised in that** there is a foot-operable cam member (44) for effecting pivotal movement of the actuating lever (40).

## Patentansprüche

1. Lenkrolle, umfassend:
zumindest ein Lenkrollenrad (12), das an einem Stützelement (14) zur Drehung um eine Radachse (13a) montiert ist;
ein Verbindungselement (16) zur Verbindung der Lenkrolle mit einem Körper,
wobei das Stützelement mit dem Verbindungselement für eine Schwenkbewegung um eine Schwenkachse (11) verbunden ist, die im Wesentlichen senkrecht zur Radachse (13a) und von dieser versetzt ist;
Bremsmittel (34) zum Verhindern einer Drehung des Rads (12) relativ zu dem Stützelement;
Haltemittel (50) zum Halten des Stützelements gegen seine Schwenkbewegung relativ zum Verbindungselement; und
Betätigungsmittel (40, 44, 32), die dazu bewegt werden können, zu veranlassen, dass die Bremsmittel (34) und die Haltemittel (50) in Tätigkeit gebracht werden können, wobei die Betätigungsmittel einen Betätigungshebel (40), der von dem Verbindungselement (16) drehbar gehalten wird, und ein Betätigungselement (32) einschließen, das sich koaxial entlang der Schwenkachse (11) der Lenkrolle erstreckt und durch den Betätigungshebel (40) in eine Richtung bewegt werden kann, die im Wesentlichen parallel zur Schwenkachse (11) der Lenkrolle ist; **dadurch gekennzeichnet, dass** ein Bremselement (34) ein mit dem Betätigungselement (32) verbundenes Teil (34a) und einen von dem Teil (34a) entfernten Abschnitt (34b) aufweist, der mit einem Teil des Rads zum Abbremsen desselben in Eingriff gebracht werden kann,
wobei das Bremselement (34) von dem Stützelement (14) zwischen dem Teil (34a) und dem Abschnitt (34b) drehbar gestützt wird und zumindest eine Halteformation (54) aufweist, die mit einem Halteelement (52, 53) zum Halten des Stützelements gegen eine Schwenkbewegung in Eingriff gebracht werden kann:
wobei das Halteelement (52, 53) an dem Verbindungselement (16) befestigt ist und sich ein Abschnitt (52) desselben zum Stützelement (14) erstreckt, um durch die Halteformation(en) (54) des Bremselements (34) in Eingriff gebracht werden zu können.

2. Lenkrolle nach Anspruch 1, weiterhin **dadurch gekennzeichnet, dass** sich das Betätigungselement durch Oberflächenöffnungen erstreckt, die im Verbindungselement und im Stützelement vorgesehen sind.

3. Lenkrolle nach Anspruch 1 oder Anspruch 2, weiterhin **dadurch gekennzeichnet, dass** sich das Betätigungselement (32) durch das Halteelement (52, 53) erstreckt.

4. Lenkrolle nach irgendeinem der vorhergehenden Ansprüche, weiterhin **dadurch gekennzeichnet, dass** ein mit dem Fuß betätigbares Nockenelement (44) zum Bewirken einer Drehbewegung des Betätigungshebels (40) vorhanden ist.

## Revendications

1. Une roulette, comprenant :
au moins une roulette (12) montée sur un membre support (14) pour la rotation sur un axe de roue (13a) ;
un membre de connexion (16) pour le raccordement de la roulette à un corps, le membre support étant connecté au membre de connexion pour le mouvement de pivotement sur un axe de pivotement (11) substantiellement perpendiculaire à l'axe de roue (13a) et décalé par rapport à ce dernier ;
un dispositif de freinage (34) pour empêcher la rotation de la roue (12) par rapport au membre support ;
un dispositif de maintien (50) pour maintenir le membre support contre son mouvement de pivotement par rapport au membre de connexion ; et
un dispositif d'actionnement (40, 44, 32) pouvant être actionné de façon à enclencher le dispositif de freinage (34) et le dispositif de maintien (50), le dispositif d'actionnement comprenant un levier d'actionnement (40) soutenu de manière pivotante par le membre de connexion (16), et un membre d'actionnement (32) s'étendant coaxialement le long de l'axe de pivotement (11) de la roulette et pouvant être actionné par le levier d'actionnement (40) dans un sens substantiellement parallèle à l'axe de pivotement (11) de la roulette ; **se caractérisant par** un membre de freinage (34) ayant une partie (34a) connectée au membre d'actionnement (32) et une portion (34b) éloignée de la partie (34a) pouvant s'engager avec une partie de la roue pour freiner cette dernière,
le membre de freinage (34) étant soutenu de manière pivotante par le membre support (14) entre la partie (34a) et la portion (34b) et ayant au moins une formation de maintien (54) pouvant s'engager avec un membre de maintien (52, 53) afin de maintenir le membre support contre le mouvement de pivotement ;
le membre de maintien (52, 53) étant fixé sur le membre de connexion (16) et une portion (52) de ce dernier allant jusqu'au membre support (14) de façon à pouvoir être engagé par la ou les formations de maintien (54) du membre de freinage (34).

2. Une roulette conformément à la revendication 1, se caractérisant également par le fait que le membre d'actionnement passe par des ouvertures se faisant face sur le membre de connexion et le membre support.

3. Une roulette conformément à la revendication 1 ou 2, se caractérisant également par le fait que le membre d'actionnement (32) passe par le membre de maintien (52, 53).

4. Une roulette conformément à n'importe laquelle des revendications précédentes, se caractérisant également par la présence d'un membre à came actionnable par le pied (44) pour effectuer le mouvement de pivotement du levier d'actionnement (40).
